(19) Europäisches Patentamt
European Patent Office
Office européen des brevets

(11) **EP 3 850 641 B1**

(12) **FASCICULE DE BREVET EUROPEEN**

(45) Date de publication et mention de la délivrance du brevet:
**17.04.2024  Bulletin 2024/16**

(21) Numéro de dépôt: **19765509.5**

(22) Date de dépôt: **12.09.2019**

(51) Classification Internationale des Brevets (IPC):
*G21C 9/00* *(2006.01)*   *G21D 3/00* *(2006.01)*
*G06N 3/045* *(2023.01)*   *G06N 3/082* *(2023.01)*
*G21C 17/108* *(2006.01)*

(52) Classification Coopérative des Brevets (CPC):
**G21D 3/001; G06N 3/045; G06N 3/082; G21C 9/00;**
G21C 17/108; Y02E 30/00; Y02E 30/30

(86) Numéro de dépôt international:
**PCT/EP2019/074373**

(87) Numéro de publication internationale:
**WO 2020/053339 (19.03.2020 Gazette 2020/12)**

(54) **PROCÉDÉ D'EXPLOITATION D'UN RÉACTEUR NUCLÉAIRE AVEC CALCUL DU RFTC EN LIGNE, RÉACTEUR NUCLÉAIRE CORRESPONDANT**

VERFAHREN ZUM BETRIEB EINES KERNREAKTORS MIT ONLINE-BERECHNUNG DES CTFR, ZUGEHÖRIGER KERNREAKTOR

METHOD FOR OPERATING A NUCLEAR REACTOR WITH CALCULATION OF THE CTFR ON LINE, CORRESPONDING NUCLEAR REACTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.09.2018  FR 1858157**

(43) Date de publication de la demande:
**21.07.2021  Bulletin 2021/29**

(73) Titulaire: **Framatome**
**92400 Courbevoie (FR)**

(72) Inventeur: **SEGOND, Mathieu**
**75013 Paris (FR)**

(74) Mandataire: **Lavoix**
**2, place d'Estienne d'Orves**
**75441 Paris Cedex 09 (FR)**

(56) Documents cités:
**US-A- 4 330 367        US-A1- 2010 119 026**
**US-A1- 2016 180 976**

• **KEE IN W ET AL: "Assessment of core protection and monitoring systems for an advanced reactor SMART", ANNALS OF NUCLEAR ENERGY, PERGAMON PRESS, OXFORD, GB, vol. 29, no. 5, 1 mars 2002 (2002-03-01), pages 609-621, XP027339864, ISSN: 0306-4549 [extrait le 2002-03-01]**

EP 3 850 641 B1

## Description

La présente invention concerne en général la protection et/ou la surveillance du coeur d'un réacteur nucléaire à eau pressurisée vis-à-vis de la crise d'ébullition.

Le maintien de l'intégrité de la première barrière de sûreté (gaine du combustible) est un objectif majeur de la conception des réacteurs nucléaires, et fait l'objet d'une démonstration de sûreté réalisée, entre autres, en simulant à l'aide de codes de calcul numérique le comportement du réacteur pendant des familles de transitoires accidentels.

L'ensemble de cette analyse est consignée dans le rapport définitif de sûreté de l'installation, exigé par l'autorité de sûreté nucléaire pour accorder l'autorisation d'exploitation du réacteur.

L'intégrité de la gaine du combustible est garantie par l'absence de fusion au centre des pastilles de combustible, et par l'absence de crise d'ébullition (Departure from Nucleate Boiling, DNB en anglais) à la surface de la gaine. Ces conditions doivent être satisfaites en tous points du coeur.

La crise d'ébullition est caractérisée par une dégradation de l'échange thermique entre le fluide caloporteur du circuit primaire et la surface de la gaine de combustible, qui peut conduire à un phénomène de caléfaction et à une perte possible de l'intégrité de la première barrière.

Chaque réacteur nucléaire est équipé d'un système de protection, dont le rôle est de garantir la sûreté du réacteur pour un certain nombre de situations accidentelles. Le système de protection comporte typiquement une chaîne de protection dite bas RFTC (Rapport de Flux Thermique Critique). Dans les réacteurs à quatre boucles primaires tels que les 1300MWe, N4 et EPR, la chaîne de protection bas RFTC assure la protection du réacteur nucléaire contre le phénomène de crise d'ébullition lors de transitoires accidentels de catégorie 2, caractérisés par une insertion de réactivité à dynamique modérée (retrait incontrôlé de groupes de régulation, dilution intempestive du fluide primaire conduisant à une diminution de la concentration de bore, refroidissement intempestif du circuit primaire, etc...).

A cette fin, le système de protection comprend une unité de traitement d'informations (appelé Système de Protection Intégré Numérique ou SPIN sur les réacteurs 1300 MWe et N4), qui intègre une unité fonctionnelle désignée par le nom « algorithme bas RFTC ». Cet algorithme calcule en ligne les marges de sûreté vis-à-vis de la crise d'ébullition. Pour ce faire, elle calcule le RFTC, et compare la valeur calculée à une valeur limite tenant compte des incertitudes de conception du réacteur et des incertitudes de reconstruction de la valeur du RFTC. La chaîne de protection bas RFTC provoque un arrêt automatique du réacteur si la valeur reconstruite est inférieure à la limite.

Le rapport de flux thermique critique ou RFTC est défini comme le rapport entre le flux thermique critique et le flux thermique local. Le flux thermique local correspond au flux thermique émis par les crayons combustibles à travers la gaine. Le flux thermique critique est la valeur du flux thermique conduisant un endommagement de la gaine du crayon combustible, qui dépend des conditions thermo-hydrauliques locales du fluide.

L'algorithme bas RFTC utilise une modélisation thermo-hydraulique simplifiée du coeur, ajusté lors de la conception par des fonctions correctrices (bias curves) agissant sur les grandeurs thermo-hydrauliques locales, afin d'assurer une réponse conservative vis-à-vis du RFTC calculé par le code thermo-hydraulique 3D de référence.

Cette modélisation thermo-hydraulique simplifiée permet de calculer le flux thermique local à partir des grandeurs mesurées caractérisant la distribution de puissance du réacteur et les conditions thermohydrauliques locales permettant d'évaluer le flux thermique critique.

Par ailleurs, l'algorithme bas RFTC utilise une corrélation de flux critique prédéterminée pour calculer le flux thermique critique. Cette corrélation est déterminée de manière empirique, à partir de données expérimentales. La conception de cette corrélation représente un développement complexe et coûteux. Sa formule analytique de type polynomial multidimensionnel est postulée a priori et ajustée manuellement par étapes successives au cours du processus de développement afin de répondre à certains critères statistiques.

L'algorithme de calcul bas RFTC est peu précis, de telle sorte qu'il est nécessaire de prévoir de fortes marges pour garantir la sûreté pendant les opérations du réacteur nucléaire. Ceci est très pénalisant pour le pilotage du réacteur. En outre, bien que simplifiée, la modélisation thermo-hydraulique nécessite un traitement numérique sophistiqué utilisant des systèmes à microprocesseurs permettant de faire converger l'algorithme sur des temps compatibles avec la protection du réacteur nucléaire.

US4330367 A divulgue un procédé d'exploitation selon le préambule de la revendication 1.

US2016/180976 A1 divulgue un procédé dans lequel la distribution axiale de puissance du coeur est calculée en utilisant un réseau de neurones profond.

Dans ce contexte, l'invention vise à proposer un procédé d'exploitation d'un réacteur nucléaire ne présentant pas les défauts ci-dessus.

A cette fin, l'invention porte sur un procédé d'exploitation d'un réacteur nucléaire comportant un coeur, le procédé étant selon la revendication 1.

L'algorithme bas RFTC présente le défaut majeur que les grandeurs thermo-hydrauliques locales sont reconstituées avec une modélisation physique simplifiée : modèle monocanal, simple phase, sans corrélation thermo-hydraulique autre que la corrélation de flux critique (pertes de charge, taux de vide, ...).

L'utilisation d'un réseau de neurones profond permet de déterminer le rapport de flux thermique critique en fonction des valeurs courantes des grandeurs limites caractérisant le fonctionnement du réacteur nucléaire, de manière beaucoup plus précise et beaucoup plus rapide qu'avec l'algorithme bas RFTC implémenté aujourd'hui.

Les valeurs prédites par le réseau de neurones profond sont beaucoup plus proches des valeurs calculées par le code thermo-hydraulique de référence. L'erreur de reconstruction du RFTC est fortement réduite. En conséquence, les marges d'exploitation du réacteur nucléaire sont nettement meilleures.

Le procédé d'exploitation peut être selon l'une des revendications dépendantes 2 à 19.

Selon un second aspect, l'invention porte sur un réacteur nucléaire comprenant :

- un coeur ;
- un système de contrôle ;
- une unité de traitement de l'information, configurée pour mettre en oeuvre le procédé d'exploitation ayant les caractéristiques ci-dessus.

D'autres caractéristiques et avantages ressortiront de la description détaillée qui en est donnée ci-dessous, à titre indicatif et nullement limitatif, en référence aux figures annexées, parmi lesquelles :

- la figure 1 est un diagramme d'étape représentant le procédé de l'invention ;
- la figure 2 est une représentation schématique simplifiée d'un réacteur nucléaire prévu pour la mise en oeuvre du procédé de la figure 1 ;
- la figure 3 est une représentation schématique des étapes d'acquisition et de calcul du procédé de la figure 1, pour un premier mode de réalisation de l'invention ;
- la figure 4 est une représentation schématique du réseau de neurones profond utilisé dans le procédé de la figure 1 ; et
- la figure 5 est une représentation schématique des étapes d'acquisition et de calcul du procédé de la figure 1, pour un second mode de réalisation de l'invention.

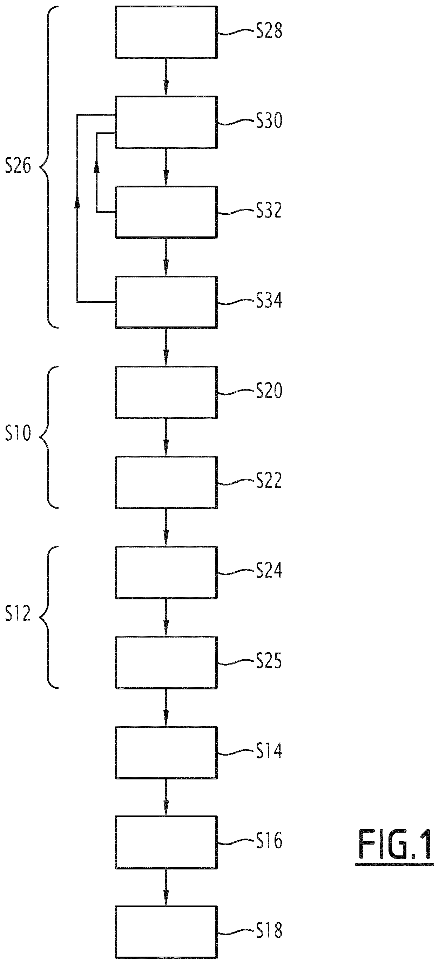

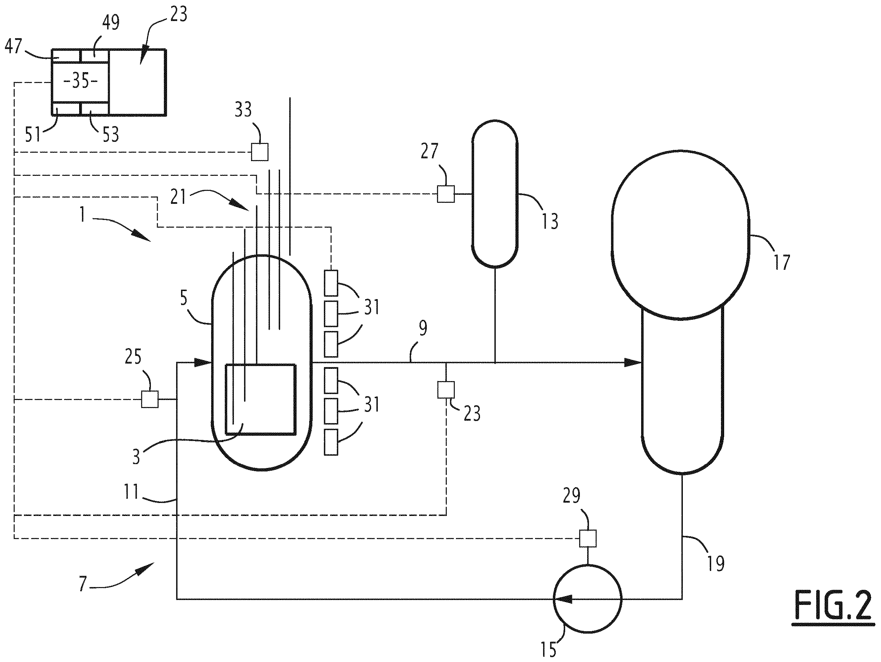

Le procédé d'exploitation représenté de manière schématique sur la figure 1 est destiné à être mis en oeuvre dans un réacteur nucléaire du type représenté sur la figure 2.

Ce réacteur nucléaire est typiquement un réacteur à eau pressurisée (REP, ou PWR en anglais).

En variante, il est destiné à être mis en oeuvre sur tout autre type de réacteur nucléaire adapté.

Le réacteur nucléaire 1 comporte un coeur 3.

Le coeur 3 comporte typiquement une pluralité d'assemblages de combustibles nucléaires, de forme prismatique, disposés les uns contre les autres. Chaque assemblage de combustibles nucléaires comporte une pluralité de crayons de combustibles nucléaires, maintenus en position les uns par rapport aux autres par des grilles.

Chaque crayon comporte une gaine tubulaire, en un métal tel que le zircaloy, des pastilles de combustibles nucléaires étant empilées à l'intérieur de la gaine.

Le réacteur nucléaire 1 comprend également une cuve sous pression 5 contenant le coeur 3 et au moins une boucle primaire 7.

Typiquement, le réacteur nucléaire comporte plusieurs boucles primaires 7, par exemple trois ou quatre boucles primaires 7.

La ou chaque boucle primaire 7 comprend des branches chaude et froide 9, 11 raccordées fluidiquement directement à la cuve 5, un pressuriseur 13 contrôlant la pression dans la boucle primaire 7, et une pompe primaire 15 assurant la circulation du fluide primaire dans la boucle primaire 7. Le pressuriseur 13 est généralement commun aux différentes boucles primaires.

Typiquement, la boucle primaire 7 comporte encore un générateur de vapeur 17, placé en amont de la pompe primaire 15.

La branche chaude 9 raccorde fluidiquement une tubulure de sortie de fluide primaire de la cuve 5 à la boîte à eau d'entrée de fluide primaire du générateur de vapeur 17. Le pressuriseur 13 est piqué sur la branche chaude 9.

Une branche intermédiaire 19 du circuit primaire, fréquemment désignée sous le nom de « branche en U », raccorde la boîte à eau de sortie de fluide primaire du générateur de vapeur 17 à l'aspiration de la pompe primaire 15. La branche froide 11 raccorde un refoulement de la pompe primaire 15 à une tubulure d'entrée de fluide primaire de la cuve 5.

Le réacteur nucléaire 1 comporte encore des organes de contrôle de la réactivité du coeur 21.

Ces organes de contrôle 21 sont typiquement désignés par l'appellation « grappes de contrôle » et comportent une pluralité de crayons en un matériau absorbant les neutrons.

Le réacteur nucléaire 1 comporte encore des mécanismes, non représentés, configurés pour sélectivement déplacer les organes de contrôle 21 à l'intérieur de la cuve 5, de manière à les insérer ou à les extraire hors du coeur 3.

Le réacteur nucléaire 1 comporte encore un système de contrôle 23.

Ce système de contrôle 23 est typiquement un système de protection, configuré pour provoquer un arrêt d'urgence du réacteur nucléaire en cas de situation accidentelle.

Pour ce faire, le système de protection 23 est configuré pour envoyer un ordre d'arrêt automatique du réacteur au mécanisme d'entraînement des organes de contrôle 21. Un tel ordre provoque l'insertion rapide des organes de contrôle dans le coeur 3 du réacteur nucléaire.

En variante, le système de contrôle 23 est un système de surveillance, configuré pour générer une alarme quand le réacteur nucléaire approche de ses limites opérationnelles.

Selon une autre variante, le système de contrôle 23 joue le rôle à la fois de système de surveillance et de système de protection.

Le réacteur nucléaire 1 est encore équipé d'une pluralité de capteurs, configurés pour mesurer une pluralité de grandeurs caractérisant le fonctionnement du réacteur nucléaire 1.

Ainsi, le réacteur nucléaire 1 comporte des capteurs de température 23, 25 mesurant respectivement la température du fluide primaire dans les branches chaude et froide 9, 11.

Le réacteur nucléaire 1 comporte un capteur 27, mesurant la pression dans le pressuriseur 13.

Le réacteur nucléaire comporte encore un capteur 29 mesurant la vitesse de rotation de la pompe primaire 15.

Le réacteur nucléaire 1 comporte également des détecteurs de flux neutronique 31.

Selon un premier mode de réalisation de l'invention, ces détecteurs sont des détecteurs ex-core disposés en dehors du coeur 3.

Les détecteurs 31 sont répartis autour de la cuve 5.

Typiquement, ce sont des chambres ex-core multi-étagées, avec par exemple 6 sections disposées les unes au-dessus des autres selon l'axe central de la cuve.

Les détecteurs 31 permettent de mesurer le flux neutronique émis par le coeur 3 à différents niveaux axiaux.

Le réacteur nucléaire 1 comporte un capteur 33 de position des organes de contrôle de la réactivité du coeur 21.

Le réacteur nucléaire comporte par ailleurs une unité de traitement d'informations 35, configurée pour mettre en oeuvre un procédé d'exploitation qui sera décrit plus bas.

L'unité de traitement d'informations est par exemple un élément du système de contrôle 23. Elle est formée typiquement d'un processeur et d'une mémoire associée au processeur. En variante, l'unité de traitement d'informations est réalisée sous forme de composants logiques programmables, tels que des FPGA (de l'anglais Field-Programmable Gate Array), ou encore sous forme de circuits intégrés dédiés, tels que des ASIC (de l'anglais Application-Specific Integrated Circuit).

Les différents capteurs 23, 25, 27, 29, 31, 33 renseignent l'unité de traitement d'informations 35.

Le procédé d'exploitation du réacteur nucléaire 1 selon le premier mode de réalisation va maintenant être décrit, en référence aux figures 1, 3 et 4.

Le procédé comprend les étapes suivantes :

- étape S10 : acquisition d'une pluralité de grandeurs caractérisant le fonctionnement du réacteur nucléaire 1 ;

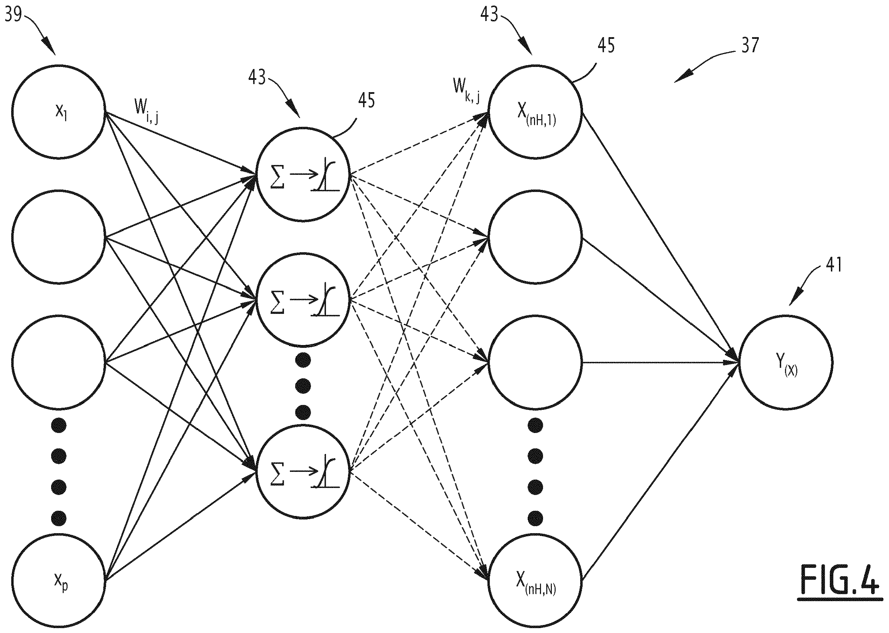

- étape S12 : calcul d'au moins un rapport de flux thermique critique (RFTC) à l'aide d'un réseau de neurones profond 37, représenté sur la figure 4, les entrées du réseau de neurones profond 37 étant déterminées en utilisant les grandeurs acquises, le réseau de neurones profond 37 comportant au moins deux couches cachées d'au moins cinq neurones chacune ;

- étape S14: calcul des écarts entre l'au moins un rapport de flux thermique critique (RFTC) calculé et une pluralité de valeurs de référence prédéterminées ;

- étape S16 : élaboration d'un signal de commande du système de contrôle du réacteur 23, en utilisant les écarts calculés, le signal de commande étant choisi dans la liste comportant au moins les valeurs suivantes :

  * arrêt automatique du réacteur ou alarme ;
  * ne rien faire ;

- étape S18 : arrêt d'urgence du réacteur par le système de contrôle 23, quand le signal de commande élaboré présente la valeur « arrêt automatique du réacteur », ou émission d'un signal d'alarme par le système de contrôle 23 quand le signal de commande élaboré présente la valeur « alarme ».

Les grandeurs acquises comprennent au moins des mesures de flux neutronique effectuées par les détecteurs de flux neutronique 31, permettant de reconstruire la distribution axiale de puissance $P(z)$ dans le coeur 3, comme décrit plus bas.

Les grandeurs acquises comportent également, pour la ou chaque boucle primaire 7, une ou plusieurs des grandeurs suivantes : pression p du pressuriseur, débit Q de fluide primaire dans la boucle primaire, température de fluide primaire dans les branches chaude et froide Tbc et Tbf.

Typiquement, toutes les grandeurs ci-dessus sont acquises.

La pression du pressuriseur p et les températures du fluide primaire dans les branches chaude et froide Tbc et Tbf sont fournies directement par les capteurs 27, 23, 25.

Le débit de fluide primaire Q est reconstruit en utilisant la vitesse de rotation des pompes primaires, mesurée par le capteur 29. Elle est déterminée par calcul, en utilisant par exemple une relation indiquant directement le débit de fluide primaire à partir de la vitesse de rotation.

Les grandeurs acquises comprennent encore la position d'insertion courante des organes de contrôle de la réactivité du coeur 21, fournie par le détecteur 33

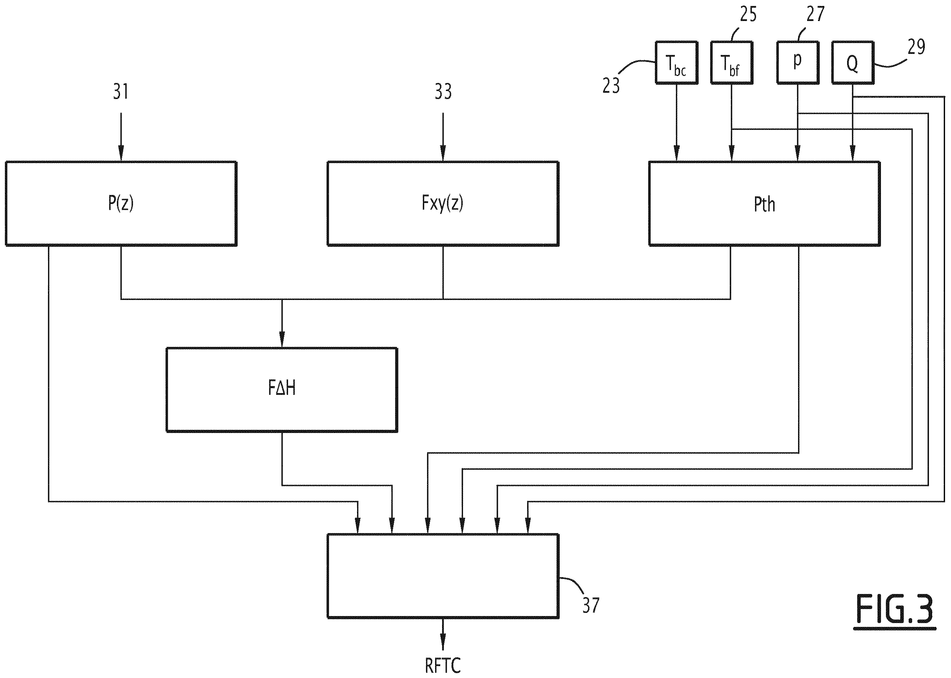

Ainsi, comme illustré sur les figures 1 et 3, l'étape d'acquisition S10 comprend typiquement une sous-étape de lecture S20 de la valeur fournie par les capteurs 23, 25, 27, 29, 31, 33, certaines grandeurs caractérisant le fonctionnement du réacteur étant directement lues sur ces capteurs. Ce sont en particulier la pression p du pressuriseur, et les températures de branches chaude et froide Tbc et Tbf.

L'étape d'acquisition S10 comprend également une sous-étape S22, au cours de laquelle au moins une autre grandeur caractérisant le fonctionnement du réacteur nucléaire est déterminée par calcul à partir des valeurs mesurées. Ceci concerne typiquement la reconstruction du débit Q de fluide primaire, ou encore l'application de filtres sur les grandeurs acquises à l'étape S20.

L'étape de calcul d'au moins un RFTC S12 comprend une sous-étape S24 de détermination des entrées du réseau de neurones profond 37 en utilisant les grandeurs acquises, et une sous-étape S25 de calcul de l'au moins un RFTC à l'aide du réseau de neurones profond 37 en utilisant les entrées déterminées à la sous-étape S24.

Les entrées du réseau de neurones 37 comprennent au moins la distribution axiale de puissance P(z) dans le coeur 3 du réacteur nucléaire, reconstruite à partir des mesures de flux neutronique acquises.

La distribution axiale de puissance P(z) est un vecteur ayant une pluralité de composantes, chaque composante correspondant à un niveau de puissance moyenne du réacteur nucléaire à une cote axiale donnée. Chaque composante définit une des entrées du réseau de neurones profond.

Le nombre de composantes dépend du degré de précision souhaité pour la reconstruction de la distribution de puissance, et donc de la précision souhaitée du calcul du RFTC. Par exemple, la distribution axiale de puissance a autant de composantes qu'il y a de sections dans chaque détecteur 31 : les signaux issus des différentes sections des détecteurs définissent dans ce cas des entrées du réseau de neurones profond.

En variante, la distribution axiale de puissance a plus de composantes que le nombre de sections dans chaque détecteur 31. Un module de reconstruction de la puissance axiale à partir des valeurs issues des différentes sections des détecteurs fournit à partir d'un traitement algorithmique dédié (par exemple une interpolation polynomiale) la distribution de puissance axiale maillée plus finement dont chaque composante définit une des entrées du réseau de neurones profond.

A la sous-étape S24, la puissance du réacteur nucléaire 1 à un niveau axial donné est donc calculée à partir des flux neutroniques mesurés, en utilisant par exemple des relations analytiques donnant directement le niveau de puissance en fonction du flux neutronique et de la puissance thermique dégagée par le coeur Pth, reconstruite comme décrit ci-dessous.

Les entrées du réseau de neurones 37 comprennent également la puissance thermique dégagée par le coeur Pth.

A la sous-étape S24, la puissance thermique dégagée Pth est déterminée par calcul, en utilisant au moins la pression du pressuriseur p, le débit de fluide primaire Q, et les températures du fluide primaire dans les branches chaude et froide Tbc et Tbf.

La méthode de calcul est connue et ne sera pas détaillée ici.

Typiquement, on effectue un calcul de puissance thermique Pth dégagée pour chaque boucle primaire 7, en utilisant les grandeurs acquises pour ladite boucle primaire 7.

Les entrées du réseau de neurones 37 comprennent également le facteur d'élévation d'enthalpie FΔH.

A la sous-étape S24, le facteur d'élévation d'enthalpie FΔH est déterminé en mettant en oeuvre les opérations suivantes :

- calcul d'un facteur de pic radial de puissance Fxy(z), en utilisant la position d'insertion courante des organes de contrôle de la réactivité du coeur 21 acquise ;
- calcul du facteur d'élévation d'enthalpie FΔH en utilisant le facteur de pic radial de puissance Fxy(z) calculé, la distribution axiale de puissance P(z) reconstruite et la puissance thermique dégagée Pth déterminée.

Le facteur de pic radial de puissance Fxy(z) et le facteur d'élévation d'enthalpie FΔH sont calculés en utilisant des formules connues, qui ne seront pas détaillées ici.

De préférence, on effectue un calcul de facteur d'élévation d'enthalpie FΔH pour chaque boucle primaire 7, en utilisant la puissance thermique dégagée Pth calculée pour ladite boucle primaire 7.

Quand le réacteur nucléaire 1 comprend plusieurs boucles primaires 7, un rapport de flux thermique critique RFTC est de préférence calculé à la sous-étape S25 pour chaque boucle primaire 7, à l'aide du réseau de neurones profond 37. Pour ce faire, le réseau de neurones profond 37 utilise les entrées déterminées avec au moins les grandeurs acquises pour la boucle primaire 7 correspondante.

En variante, un seul rapport de flux thermique critique RFTC est calculé à l'aide du réseau de neurones profond 37. Il est par exemple calculé en utilisant des entrées déterminées par tout traitement des grandeurs acquises pour les boucles primaires, adapté pour l'évaluation du RFTC.

Comme visible sur la figure 4, le réseau de neurones profond 37 comporte une couche d'entrée 39 située à gauche de la figure 4, une couche de sortie 41 située à droite de la figure 4, et une pluralité de couches intermédiaires 43, appelées encore couches cachées. Le nombre nH de couches intermédiaires 43 est supérieur ou égal à deux, de préférence supérieur ou égal à cinq, et encore de préférence supérieur ou égal à dix.

Ceci permet de rendre compte d'un grand nombre de situations différentes dans le réacteur nucléaire.

Chaque couche cachée 43 comprend au moins cinq neurones 45, de préférence au moins sept neurones 45, et encore de préférence au moins dix neurones 45.

La couche d'entrée 39 comporte autant de neurones d'entrée que d'entrées.

Par exemple, la couche d'entrée 39 comporte un neurone d'entrée pour chacune des entrées p, Q, Tbf, Pth, F$\Delta$H. Elle comporte également un neurone d'entrée pour chacune des composantes de la distribution axiale de puissance P(z).

Ainsi, la couche d'entrée 39 comporte par exemple onze neurones d'entrée, si la distribution axiale de puissance P(z) est un vecteur à six composantes.

La couche de sortie 41 comporte un unique neurone de sortie, correspondant à la valeur minimale du RFTC calculée pour la boucle primaire correspondante.

Avantageusement, les entrées font l'objet d'un premier post-traitement avant d'être introduites dans le réseau de neurones 37 lors de l'étape S22 de la figure 1.

Le premier post-traitement consiste par exemple en une application de termes de compensation dynamique, typiquement des filtres avance-retard, permettant que chaque grandeur acquise soit à l'image du paramètre physique correspondant. Ce post-traitement permet de compenser le temps de réponse d'instrumentation (mesures de températures branches froide et chaude de la cuve), le temps de chute des organes de contrôle de la réactivité du coeur, et le temps de réponse des processus et algorithmes de traitement. La nature fonctionnelle du traitement de l'information par le réseau de neurones 37 permet de réduire considérablement le besoin d'utiliser des filtres, par comparaison avec des algorithmes classiques.

Les entrées font de préférence l'objet d'un second post-traitement avant d'être introduites dans le réseau de neurones, par normalisation de chacune des grandeurs ou composantes.

Les entrées constituent un vecteur, appelé vecteur d'entrée et noté $X_0$. Chaque couche cachée i du réseau de neurones élabore un vecteur de valeurs $X_i$, par traitement du vecteur de valeurs $X_{i-1}$ issu de la couche immédiatement précédente i-1.

Ainsi, pour chaque couche cachée i, i étant compris entre 1 et nH,

$$X_i = \sigma_i . A_i . X_{i-1}$$

où $A_i$ est une matrice prédéterminée de dimensions $N_i$ * $N_{i-1}$, $N_i$ étant le nombre de neurones de la couche i et $N_{i-1}$ étant le nombre de neurones de la couche i-1 ; $\sigma_i$ est un opérateur non linéaire prédéterminé.

En d'autres termes, le rapport de flux thermique critique est calculé par le réseau de neurones profond 37 en utilisant la formule suivante :

$$Y(X_0) = [\prod_{i=1}^{i=nH+1} \sigma_i . A_i] . X_0$$

où Y est le rapport de flux thermique critique calculé.

Chaque matrice $A_i$ agit comme une transformation affine sur les composantes du vecteur $X_{i-1}$. En d'autres termes :

$$A_i X_{i-1} = W_i X_{i-1} + b_i$$

où $W_i$ est la matrice des poids synaptiques qui relient les $N_i$ neurones de la couche i au $N_{i-1}$ neurones de la couche i-1, et $b_i$ est le vecteur des biais de dimension $N_i$ de la couche i.

Pour la dernière couche on notera que la matrice $A_{nH+1}$ est de dimension $1 \times N_{nH}$ et que $\sigma_{nH+1}= 1$ : il n'y a pas d'application de fonction de transfert non linéaire pour établir le signal Y de la dernière couche.

Les opérateurs non linéaires $\sigma_i$ agissent chacun comme une fonction non linéaire, par exemple sigmoïde, sur toutes les composantes du vecteur $A_i X_{i-1}$. Une fonction sigmoïde est une fonction s'exprimant de la manière suivante :

$$f(x) = \frac{1}{1 + e^{-lx}}$$

où l est une constante spécialement paramétrée.

A l'étape S14, pour chaque boucle primaire, un jeu d'écarts est calculé entre le rapport de flux thermique critique calculé pour ladite boucle primaire et la pluralité de valeurs de référence prédéterminées. On effectue ainsi autant de calculs d'écart qu'il y a de boucles primaires.

Ces valeurs sont des seuils de référence de fonctionnement, appelés seuils de protection (ou de surveillance), qui intègrent les incertitudes du procédé, à savoir les incertitudes des mesures et les incertitudes sur les calculs.

Typiquement, les écarts calculés sont affichés sous forme alphanumérique ou graphique sur au moins un écran, pour la surveillance en temps réel des marges de protection et d'exploitation de la tranche, pour chaque boucle primaire.

Quand un seul RFTC est calculé, on calcule un seul jeu d'écarts à l'étape S14.

L'étape S16 permet d'interpréter les jeux d'écarts constatés à l'étape S14.

Pour ce faire, un signal de commande provisoire est élaboré pour chaque boucle primaire, en utilisant le jeu d'écart calculé pour ladite boucle.

Quand le système de contrôle est un système de protection, le signal de commande provisoire est choisi dans la liste comportant au moins les valeurs suivantes : arrêt automatique du réacteur, ne rien faire.

Quand le système de contrôle est un système de surveillance, le signal de commande provisoire est choisi dans la liste comportant au moins les valeurs suivantes : alarme, ne rien faire.

Quand le système de contrôle est un système de protection et de surveillance, le signal de commande provisoire est choisi dans la liste comportant au moins les valeurs suivantes : arrêt automatique du réacteur, alarme, ne rien faire.

Le signal de commande envoyé au système de contrôle du réacteur 23 est élaboré en utilisant les signaux de commande provisoires de toutes les boucles primaires.

Après avoir interprété les écarts constatés à l'étape S14, l'étape S16 consiste à appliquer des logiques de votes pour les signaux élaborés pour chaque boucle du réacteur. Par exemple, si la majorité des signaux de commande provisoires ont la valeur « arrêt automatique du réacteur », alors le signal de commande envoyé au système de contrôle 23 est « arrêt automatique du réacteur ».

A l'étape S18, le système de contrôle 23 reçoit le signal de commande élaboré à l'étape 16, et agit en conséquence. Par exemple, il déclenche un arrêt automatique du réacteur 1 par insertion des organes de contrôle de la réactivité du coeur 21 si le signal de commande est « arrêt automatique du réacteur », ou l'émission d'un signal d'alarme si le signal de commande élaboré présente la valeur « alarme ».

De préférence, le procédé comprend encore une étape S26 de conception du réseau de neurones profond 37. L'étape de conception S26 comprend les sous-étapes suivantes :

- S28 : constitution d'une base de données comprenant au moins 100 000 états du réacteur,
- S30 : apprentissage du réseau de neurones profond, en utilisant au moins une partie de la base de données.

Avantageusement, la base de données comprend au moins 500 000 états du réacteur, de préférence au moins 1 000 000 d'états du réacteur.

Chaque état est défini par un jeu de valeurs des grandeurs caractérisant le fonctionnement du réacteur nucléaire, et par une valeur de rapport de flux thermique critique. Ladite valeur de flux thermique critique est calculée par un code de calcul thermo-hydraulique 3D de référence en utilisant le jeu de valeurs correspondant des grandeurs caractérisant le fonctionnement du réacteur nucléaire.

Le code de calcul thermo-hydraulique coeur 3D est un code de haute précision, par exemple le code FLICA. Typiquement, des techniques d'échantillonnage Monte-Carlo sont utilisées pour générer la base de données.

Les états sont choisis pour couvrir une pluralité de situations accidentelles prédéterminées conduisant à déclencher l'intervention de la chaine de protection générique bas RFTC du réacteur.

Les situations accidentelles prédéterminées sont par exemple celles qui sont dites de catégorie 2 dans le rapport de sûreté du réacteur nucléaire, qui sollicitent l'intervention de la chaine de protection générique bas RFTC.

Les plages de variations des grandeurs caractérisant le fonctionnement du réacteur nucléaire sont aussi choisies de telle sorte qu'elles couvrent le domaine de validité de la corrélation de flux thermique critique.

Les données sont générées de telle sorte qu'elles optimisent la détection de symétrie physique lors de la phase d'apprentissage par le réseau de neurones.

De préférence, les variables d'entrée sont normalisées.

La sous-étape d'apprentissage S30 est effectuée sur une partie seulement de la base de données constituée à la sous-étape S28. Par exemple, elle utilise entre 50% et 90% de la base de données, typiquement 80%.

La phase d'apprentissage comporte les opérations suivantes :

i) Détermination de la structure neuronale optimale en réalisant une étude de sensibilité dédiée au choix des hyperparamètres de modèles, cette étape pouvant nécessiter l'utilisation d'algorithme d'optimisation (de type algorithme génétique): nombre de couches cachées, nombre de neurones par couche, choix de la fonction de transfert imposée par la phénoménologie du phénomène de crise d'ébullition (par exemple dérivable et devant présenter un fort caractère non-linéaire du fait de l'expression analytique de la corrélation de flux critique) ;

ii) Développement d'un algorithme d'apprentissage optimisé spécifiquement pour la base de données générée, permettant d'accélérer et stabiliser le processus de convergence, et d'améliorer la convergence vers des solutions plus robustes par évitement de minima locaux. Ceci améliore les capacités de généralisation du réseau de neurones et donc sa capacité à répondre positivement aux phases de validation et de tests décrites ci-après.

Ceci est réalisé par exemple en développant un algorithme à descente de gradient stochastique par lots adaptatifs. La mise à jour à chaque cycle de l'apprentissage du tenseur des poids synaptiques et des biais est réalisée sur des lots de données de taille évolutive en balayant toute la base d'apprentissage, paramétrée par le numéro du cycle.

Par ailleurs, des méthodes d'inertie sur le pas d'adaptation de l'algorithme d'apprentissage sont avantageusement utilisées, afin d'améliorer l'efficacité et la robustesse de la phase d'apprentissage.

De préférence, l'étape S26 comporte encore une sous-étape S32 de validation du réseau de neurones profond déterminé à la sous-étape S30. Cette phase de validation est effectuée sur une seconde partie de la base de données, qui n'a pas été utilisée à la sous-étape S30. Typiquement, toute la partie de la base de données qui n'a pas été utilisée à l'étape S30 est utilisée à l'étape S32. Ceci permet de valider les prédictions du réseau de neurones profond élaboré à l'issue de l'étape S30 par comparaison avec les prédictions générées avec le code de référence, et de caractériser la capacité de généralisation du modèle prédictif ainsi élaboré. Des études de sensibilité sont de préférence réalisées pendant la sous-étape S32. Si la phase de validation n'est pas satisfaisante, on revient à la sous-étape S30, puis on modifie la structure neuronale (i.e. nombre de couches cachées, nombre de neurones par couche), ou les hyperparamètres de l'algorithme d'apprentissage, afin de relancer l'étape d'apprentissage visant à déterminer les matrices des poids synaptiques et vecteurs des biais du réseau de neurones définissant ainsi les matrices $A_i$ précédemment définies.

De préférence, l'étape S26 comporte encore une sous-étape S34 de validation (test) phénoménologique du réseau de neurones profond sur des données indépendantes de la base de données déterminées à la sous-étape S28.

Au cours de la sous-étape S34, le réseau de neurones profond est implémenté en couplage avec des codes de calcul simulant des transitoires accidentels. Ces transitoires accidentels sont typiquement ceux définis dans le rapport de sûreté du réacteur nucléaire.

Si cette ultime phase de test n'est pas satisfaisante, la sous-étape S30 est répétée.

Ainsi, le procédé décrit ci-dessus est particulièrement adapté pour être mis en oeuvre par un réacteur du type décrit plus haut.

Inversement, le réacteur nucléaire 1 décrit plus haut est particulièrement adapté pour mettre en oeuvre le procédé qui vient d'être décrit.

Notamment, l'unité de traitement d'informations 35 comporte, comme illustré sur la figure 2 :

- un module 47 d'acquisition d'une pluralité de grandeurs caractérisant le fonctionnement du réacteur nucléaire ;
- un module 49 de calcul d'au moins un rapport de flux thermique critique à l'aide du réseau de neurones profond 37, configuré pour déterminer les entrées du réseau de neurones profond 37 en utilisant les grandeurs acquises et déterminées, le réseau de neurones profond 37 comportant au moins deux couches cachées d'au moins cinq neurones chacune ;
- un module 51 de calcul des écarts entre l'au moins un rapport de flux thermique critique calculé et une pluralité de valeurs de référence prédéterminées ;
- un module 53 d'élaboration d'un signal de commande du système de contrôle du réacteur en utilisant les écarts calculés, le signal de commande étant choisi dans la liste comportant au moins les valeurs suivantes :

    * arrêt automatique du réacteur ou alarme ;
    * ne rien faire.

Le système de contrôle 23 du réacteur est configuré pour provoquer un arrêt automatique du réacteur quand le signal de commande élaboré présente la valeur « arrêt automatique du réacteur ». Le système de contrôle 23 du réacteur est configuré pour provoquer l'émission d'une alarme quand le signal de commande élaboré présente la valeur « alarme ».

En d'autres termes, le module 47 est configuré pour mettre en oeuvre l'étape S10 du procédé décrit plus haut. Le module 49 est configuré pour mettre en oeuvre l'étape S12 du procédé décrit plus haut. Le module 51 est configuré pour mettre en oeuvre l'étape S14 du procédé décrit plus haut et le module 53 pour mettre en oeuvre l'étape S16 du procédé décrit plus haut.

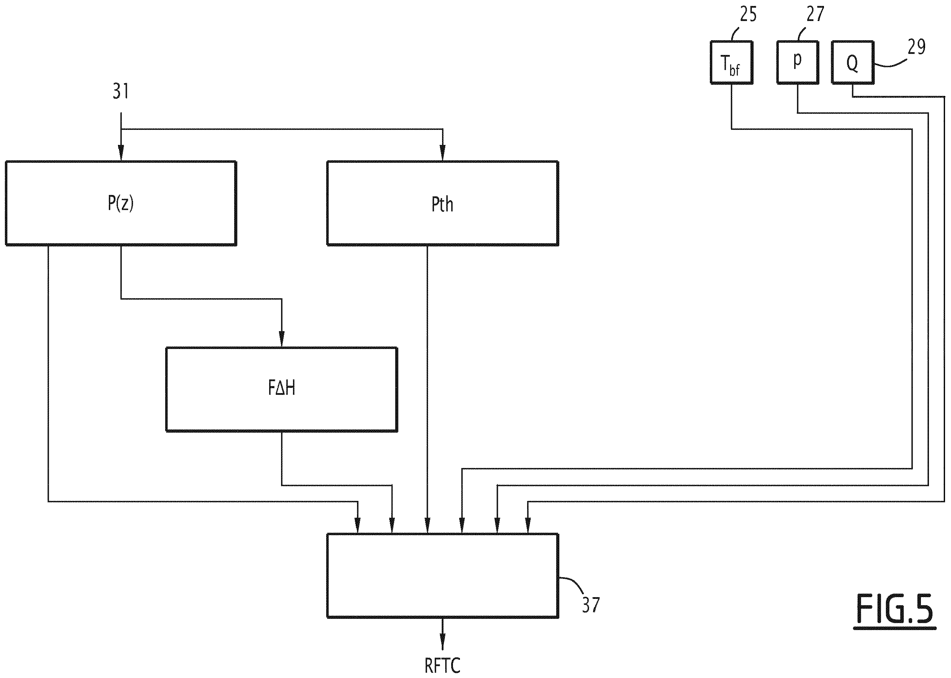

Un second mode de réalisation de l'invention va maintenant être décrit, en référence à la figure 5. Seuls les points par lesquels le second mode de réalisation se distingue du premier seront détaillés ci-dessous. Les éléments identiques ou assurant les mêmes fonctions seront désignés par les mêmes références.

Dans le second mode de réalisation, les détecteurs de flux neutroniques 31 ne sont pas des détecteurs ex-core disposés en dehors du coeur 3. Les détecteurs de flux neutroniques 31 sont des détecteurs in-core, insérés en permanence dans le coeur 3.

Ils sont distribués en plusieurs ensembles, les détecteurs d'un même ensemble étant étagés verticalement les uns au-dessus des autres.

Les détecteurs sont par exemple des collectrons, agencés sur des cannes verticalement dans le coeur. Chaque canne de collectrons permet de mesurer le flux neutronique à plusieurs hauteurs axiales dans le coeur, par exemple six hauteurs axiales pour une disposition verticale de 6 collectrons. Le réacteur nucléaire est typiquement équipé de 12 cannes de 6 collectrons chacune, réparties dans le coeur.

La puissance thermique Pth dégagée est déterminée par calcul, en utilisant les mesures de flux neutronique acquises. Ce calcul ne fait plus appel à la pression du pressuriseur p, au débit Q de fluide primaire, aux températures du fluide primaire dans les branches chaude et froide Tbc, Tbf. Les formules de calcul utilisées sont connues et ne seront pas détaillées ici.

Le facteur d'élévation d'enthalpie FΔH est reconstruit en utilisant la distribution axiale de puissance P(z). Il n'est pas nécessaire de reconstituer le facteur Fxy(z) à partir de la mesure fournie par le capteur 33 de position des organes de contrôle de la réactivité du coeur 21.

A l'étape S12, un rapport de flux thermique critique RFTC est calculé pour chaque ensemble de détecteurs de flux neutronique 31 in-core, à l'aide du réseau de neurones profond 37, avec les entrées déterminées en utilisant les mesures de flux neutroniques effectuées par lesdits détecteurs de flux neutronique 31 in-core.

A partir des mesures de flux neutronique à plusieurs hauteurs axiales fournies par l'ensemble de détecteurs, on détermine un jeu de paramètres P(z), Pth et FΔH, spécifique pour cet ensemble de détecteurs. Ces paramètres sont utilisés comme entrées pour le réseau de neurones 37.

On utilise également d'autres entrées, par exemple la pression du pressuriseur p, le débit Q de fluide primaire, la température du fluide primaire dans la branche froide Tbc, Tbf. Ces grandeurs d'entrée sont les mêmes pour tous les ensembles de détecteurs.

A l'étape de calcul des écarts S14, un jeu d'écarts est calculé entre chaque rapport de flux thermique critique préalablement déterminé et la pluralité de valeurs de référence prédéterminées.

A l'étape d'élaboration d'un signal de commande S16, un signal de commande provisoire est élaboré pour chaque rapport de flux thermique critique calculé, en utilisant le jeu d'écarts correspondant.

Le signal de commande est élaboré en utilisant au moins plusieurs des signaux de commande provisoires, selon la logique de votes décrite plus haut.

Un troisième mode de réalisation de l'invention va maintenant être brièvement décrit. Seuls les points par lesquels le troisième mode de réalisation se distingue du second seront détaillés ci-dessous. Les éléments identiques ou assurant les mêmes fonctions seront désignés par les mêmes références.

Dans le troisième mode de réalisation, l'unité de traitement d'information 35 dispose d'une cartographie de la puissance dans le coeur du réacteur, en 3 dimensions, en continu.

Cette cartographie constitue une des grandeurs caractérisant le fonctionnement du réacteur. Les autres grandeurs, par exemple Tbf, p et Q, sont acquises comme dans les premier et second modes de réalisation.

Certaines entrées du réseau de neurones profond 37 sont déterminées par calcul, en utilisant la cartographie de distribution de puissance dans le coeur en 3D, remplaçant ainsi les grandeurs P(z), Pth et FΔH précédemment décrites pour le premier mode de réalisation de l'invention.

Avantageusement, les composantes de la distribution 3D de puissance constituent les entrées d'une structure neuronale dédiée, appelée couche de convolution qui permet d'optimiser l'extraction de caractéristiques de la distribution de puissance pour élaborer le réseau de neurones profond, et notamment d'optimiser sa structure en vue d'une implémentation matérielle. La sortie de cette couche de convolution définit une partie des entrées du réseau de neurones profond 37. Cette sortie remplace notamment le vecteur des composantes de la distribution axiale de puissance en entrée du réseau de neurones profond 37, ainsi que la grandeur FΔH. Cette structure neuronale adaptée pour traiter des données structurées spatialement, remplace la multiplication matricielle par une opération mathématique de convolution entre la distribution de puissance en entrée de la structure et une série de noyaux (ou filtres) dont les degrés de liberté sont ajustés lors de l'apprentissage de l'étape S30. La couche de convolution inclut également un traitement non linéaire des sorties de la convolution à travers des fonctions de transfert non linéaires, ainsi qu'une troisième étape permettant d'introduire des invariants sous des transformations géométriques locales (par exemple des translations). Ces étapes pouvant être répétées lors de l'élaboration de la structure neuronale optimale.

Le procédé d'exploitation de l'invention peut présenter de multiples variantes.

Les grandeurs caractérisant le fonctionnement du réacteur nucléaire, acquises à l'étape S10, et les entrées du réseau de neurones profond, peuvent ne pas exactement correspondre à la liste décrite ci-dessus. D'autres grandeurs peuvent être acquises. Certaines grandeurs pourraient ne pas être acquises. Certaines entrées peuvent ne pas être utilisées. D'autres entrées peuvent être ajoutées.

En tout état de cause, la distribution de puissance impacte de manière importante la localisation dans le coeur et la valeur de la marge minimale du RFTC.

Sa prise en compte permet d'améliorer la précision de la reconstruction du RFTC. Les grandeurs caractérisant le fonctionnement du réacteur nucléaire ne sont pas nécessairement acquises de la façon décrite plus haut et représentée sur les figures 2, 3 et 5. Certaines grandeurs pourraient ne pas être lues directement par les capteurs équipant le réacteur nucléaire. Elles pourraient être élaborées à partir d'autres grandeurs mesurées ou de valeurs issues du système d'exploitation du réacteur nucléaire.

La couche de convolution décrite dans le cadre du troisième mode de réalisation pourrait être mise en oeuvre aussi dans les deux premiers modes de réalisation afin de traiter la distribution axiale de puissance P(z) dans la structure neuronale. Les autres entrées du réseau de neurones étant inchangées.

Le procédé décrit plus haut présente de multiples avantages.

Le temps de réponse est extrêmement réduit, et est par exemple de l'ordre de la milliseconde. Ceci est obtenu notamment du fait que le procédé ne demande pas la mise en oeuvre de boucles de convergence, seuls les paramètres propres au réseau de neurone profonds étant nécessaires, les opérations de calcul unitaire sont simples et facilement parallélisables si la solution matérielle le permet.

En conséquence, il libère de la capacité de calcul pour d'autres parties du système de conduite et d'instrumentation du réacteur nucléaire.

Ces performances sont obtenues du fait que la complexité de la physique sous-jacente est encodée par la paramétrisation du réseau de neurones profond à partir de la base de données. Ceci permet au réseau de neurones profond de reconstruire la valeur de RFTC du code thermo-hydraulique de référence, en utilisant simplement les poids synaptiques et les fonctions de transfert de la structure neuronale.

Le calcul de RFTC fourni par le réseau de neurones profond est très fiable, et la réponse est proche de celle fournie par le code de thermo-hydraulique 3D de référence (ici FLICA). Le conservatisme de la réponse est ajustable.

La qualité de la réponse fournie par le réseau de neurones profond est notamment due au fait qu'on n'effectue pas de reconstruction de variables thermo-hydrauliques locales intermédiaires sans modélisation physique fine. La fiabilité de la réponse fournie est fonction de la finesse du maillage de la base de données utilisée pour l'apprentissage du réseau de neurones. Ceci ne coûte que du temps de calcul, avant la mise en service dans le réacteur nucléaire. Le procédé est également plus robuste à la propagation d'incertitudes sur les données d'entrée (initiées par des fluctuations aléatoires des mesures issues de l'instrumentation du coeur) ce qui améliore l'étape de validation et qualification matérielle.

## Revendications

1. Procédé d'exploitation d'un réacteur nucléaire (1) comportant un coeur (3), le procédé comprenant les étapes suivantes :

   - acquisition d'une pluralité de grandeurs caractérisant le fonctionnement du réacteur nucléaire (1);
   - calcul d'au moins un rapport de flux thermique critique ;
   - calcul des écarts entre l'au moins un rapport de flux thermique critique calculé et une pluralité de valeurs seuil de référence prédéterminées ;
   - élaboration d'un signal de commande d'un système de contrôle (23) du réacteur, en utilisant les écarts calculés, le signal de commande étant choisi dans la liste comportant au moins les valeurs suivantes :

      * arrêt automatique du réacteur ou alarme ;
      * ne rien faire;

   - arrêt d'urgence du réacteur nucléaire (1) par le système de contrôle (23) quand le signal de commande élaboré présente la valeur « arrêt automatique du réacteur», ou émission d'un signal d'alarme par le système de contrôle (23) quand le signal de commande élaboré présente la valeur « alarme » ;

   **caractérisé en ce que** calcul l'au moins un rapport de flux thermique critique est calculé à l'aide d'un réseau de neurones profond (37), les entrées du réseau de neurones profond (37) étant déterminées en utilisant les grandeurs acquises, le réseau de neurones profond comportant au moins deux couches cachées d'au moins cinq neurones chacune, lesdites grandeurs acquises comprenant des mesures de flux neutronique effectuées par des détecteurs de flux neutronique (31), les entrées du réseau de neurones (37) comprenant la distribution axiale de puissance (P(z)) dans le coeur du réacteur nucléaire, reconstruite à partir des mesures de flux neutronique acquises.

2. Procédé selon la revendication 1, dans lequel la distribution axiale de puissance (P(z)) est un vecteur ayant une pluralité de composantes, chaque composante correspondant à une puissance moyenne du réacteur nucléaire par tranche axiale à une cote axiale donnée, chaque composante définissant une des entrées du réseau de neurones profond (37).

3. Procédé selon la revendication 1 ou 2, dans lequel les détecteurs de flux neutroniques (31) sont des détecteurs ex-core disposés en dehors du coeur (3).

4. Procédé selon la revendication 1 ou 2, dans lequel les détecteurs de flux neutroniques (31) sont des détecteurs in-core insérés en permanence dans le coeur (3).

5. Procédé selon l'une quelconque des revendications précédentes, dans lequel le réacteur nucléaire (1) comprend une cuve sous pression (5) contenant le coeur (3) et au moins une boucle primaire (7), la boucle primaire (7) comportant des branches chaude et froide (9, 11) raccordées fluidiquement directement à la cuve (5), un pressuriseur (13) contrôlant une pression dans la boucle primaire (7), et une pompe primaire (15) assurant la circulation de fluide primaire dans la boucle primaire (7), les grandeurs acquises comportant, pour la ou chaque boucle primaire (7), une ou plusieurs des grandeurs suivantes : pression du pressuriseur (p), débit (Q) de fluide primaire dans la boucle primaire (7), température du fluide primaire dans les branches chaude et froide (Tbc, Tbf).

6. Procédé selon la revendication 5, dans lequel les entrées du réseau de neurones (37) comportent une ou plusieurs des grandeurs suivantes : pression du pressuriseur (p), débit (Q) de fluide primaire dans la boucle primaire (7), température du fluide primaire dans la branche froide (Tbf).

7. Procédé selon l'une quelconque des revendications précédentes, dans lequel les entrées du réseau de neurones (37) comportent la puissance thermique dégagée par le coeur (Pth).

8. Procédé selon la revendication 7 combinée à la revendication 5 ou 6, dans lequel la puissance thermique (Pth) dégagée est déterminée par calcul, en utilisant au moins la pression du pressuriseur (p), le débit de fluide primaire (Q), les températures du fluide primaire dans les branches chaude et froide (Tbc, Tbf), acquises pour l'au moins une boucle primaire (7).

9. Procédé selon la revendication 7 combinée à la revendication 4, dans lequel, la puissance thermique (Pth) dégagée étant déterminée par calcul, en utilisant les mesures de flux neutronique acquises.

10. Procédé selon l'une quelconque des revendications précédentes, dans lequel les entrées du réseau de neurones (37) comportent le facteur d'élévation d'enthalpie (FΔH).

11. Procédé selon la revendication 10 combinée à la revendication 3 et à la revendication 8, dans lequel les grandeurs acquises comprennent une position d'insertion courante des organes de contrôle de la réactivité du coeur (21), le facteur d'élévation d'enthalpie (FΔH) étant déterminé en mettant en oeuvre les opérations suivantes :

> - calcul d'un facteur de pic radial de puissance (Fxy(z)) en utilisant la position d'insertion courante acquise ;
> - calcul du facteur d'élévation d'enthalpie (FΔH) en utilisant le facteur de pic radial de puissance (Fxy(z)) calculé, la distribution axiale de puissance (P(z)) reconstruite et la puissance thermique dégagée (Pth) déterminée.

12. Procédé selon la revendication 10 combinée à la revendication 4, dans lequel le facteur d'élévation d'enthalpie (FΔH) est reconstruit en utilisant la distribution axiale de puissance (P(z)).

13. Procédé selon l'une quelconque des revendications 5 à 6, dans lequel le réacteur nucléaire (1) comprend plusieurs boucles primaires (7), un rapport de flux thermique critique étant calculé pour chaque boucle primaire (7) à l'aide du réseau de neurones profond (37) en utilisant au moins lesdites grandeurs acquises pour ladite boucle primaire (7).

14. Procédé selon la revendication 4, dans lequel les détecteurs (31) sont distribués en plusieurs ensembles, les détecteurs (31) d'un même ensemble étant étagés verticalement les uns au-dessus des autres, un rapport de flux thermique critique minimal étant calculé pour chaque ensemble de détecteurs de flux neutronique (31) in-core à l'aide du réseau de neurones profond (37) avec les entrées déterminées en utilisant au moins les mesures de flux neutroniques effectuées par les détecteurs de flux neutronique (31) in-core dudit ensemble.

15. Procédé selon la revendication 13 ou 14, dans lequel

> - à l'étape de calcul des écarts, un jeu d'écarts est calculé entre chaque rapport de flux thermique critique calculé et la pluralité de valeurs de référence prédéterminées ;
- à l'étape d'élaboration d'un signal de commande, élaboration d'un signal de commande provisoire pour chaque rapport de flux thermique critique calculé en utilisant le jeu d'écarts correspondant, le signal de commande provisoire étant choisi dans la liste comportant au moins les valeurs suivantes :

> * arrêt automatique du réacteur ou alarme ;
> * ne rien faire ;

le signal de commande étant élaboré en utilisant au moins plusieurs des signaux de commande provisoires.

16. Procédé selon l'une quelconque des revendications précédentes, dans lequel le rapport de flux thermique critique est calculé par le réseau de neurones profond (37) en utilisant la formule suivante :

$$Y(X_0) = \left[ \prod_{i=1}^{i=nH+1} \sigma_i . A_i \right] . X_0$$

où Y est le rapport de flux thermique critique calculé
$X_0$ est un vecteur constitué des entrées du réseau de neurones profond (37) ;
nH est le nombre de couches cachées du réseau de neurones profond ;
$A_i$ est une matrice prédéterminée de dimensions $N_i * N_{i-1}$, $N_i$ étant le nombre de neurones de la couche i et $N_{i-1}$ étant le nombre de neurones de la couche i-1 ;
$\sigma_i$ est un opérateur non linéaire prédéterminé.

17. Procédé selon la revendication 16, dans lequel $A_i$ est une matrice agissant comme une transformation affine sur les composantes du vecteur $X_{i-1}$, le vecteur $X_i$ étant un vecteur dont les composantes sont déterminées par la couche de neurones i par traitement du vecteur de valeurs $X_{i-1}$ issu de la couche immédiatement précédente i-1.

18. Procédé selon la revendication 16 ou 17, dans lequel $\sigma_i$ agit comme une fonction sigmoïde sur toutes les composantes du vecteur $A_i . X_{i-1}$, le vecteur $X_i$ étant un vecteur dont les composantes sont déterminées par la couche de neurones i par traitement du vecteur de valeurs $X_{i-1}$ issu de la couche immédiatement précédente i-1.

19. Procédé selon l'une quelconque des revendications précédentes, dans lequel le procédé comprend une étape de conception du réseau de neurones profond (37), l'étape de conception comprenant les sous-étapes suivantes :

- constitution d'une base de données comprenant au moins 100 000 états de coeur du réacteur, chaque état étant défini par un jeu de valeurs desdites grandeurs caractérisant le fonctionnement du réacteur nucléaire (1) et par une valeur de rapport de flux thermique critique minimale calculée par un code de calcul thermo-hydraulique 3D de référence en utilisant le jeu de valeurs, lesdits états étant choisis pour couvrir une pluralité de situations accidentelles prédéterminées de catégorie 2, le système de contrôle (23) du réacteur étant prévu pour traiter lesdites situations accidentelles ;
- apprentissage du réseau de neurones profond (37), en utilisant au moins une partie de la base de données ;
- validation du réseau de neurones profond en utilisant une partie de la base de données indépendante de celle utilisée pour la phase d'apprentissage, et test du réseau de neurones obtenu par couplage à des codes de neutronique et thermohydraulique accidentelle permettant de simuler des transitoires accidentels sollicitant l'intervention du système de contrôle (23).

**20.** Réacteur nucléaire (1) comprenant :

- un coeur (3);
- un système de contrôle (23) ;
- une unité de traitement de l'information (35), configurée pour mettre en oeuvre le procédé d'exploitation de l'une quelconque des revendications précédentes.

**Patentansprüche**

**1.** Verfahren zum Betrieb eines Kernreaktors (1), der einen Kern (3) aufweist, wobei das Verfahren die folgenden Schritte umfasst:

- Erfassen einer Vielzahl von Größen, die den Betrieb des Kernreaktors (1) charakterisieren;
- Berechnen von mindestens einem kritischen Wärmeflussverhältnis;
- Berechnen der Abweichungen zwischen dem mindestens einen berechneten kritischen Wärmeflussverhältnis und einer Vielzahl von vorbestimmten Referenzschwellenwerten;
- Ermitteln eines Steuersignals für ein Reaktorsteuersystem (23) unter Verwendung der berechneten Abweichungen, wobei das Steuersignal aus der Liste ausgewählt wird, die mindestens die folgenden Werte enthält:

* automatische Abschaltung des Reaktors oder Alarm;
* nichts tun;

- Notabschalten des Kernreaktors (1) durch das Steuersystem (23), wenn das ermittelte Steuersignal den Wert "Automatische Abschaltung des Reaktors" aufweist oder Senden eines Alarmsignals durch das Steuersystem (23), wenn das ermittelte Steuersignal den Wert "Alarm" aufweist;

**dadurch gekennzeichnet, dass** das mindestens eine kritische Wärmeflussverhältnis mit Hilfe eines tiefen neuronalen Netzes (37) berechnet wird, wobei die Eingaben des tiefen neuronalen Netzes (37) unter Verwendung der erfassten Größen bestimmt werden, wobei das tiefe neuronale Netz mindestens zwei verborgene Schichten aus jeweils mindestens fünf Neuronen umfasst, wobei die erfassten Größen Neutronenflussmessungen umfassen, die von Neutronenflussdetektoren (31) durchgeführt werden, wobei die Eingaben des neuronalen Netzes (37) die aus den erfassten Neutronenflussmessungen rekonstruierte axiale Leistungsverteilung (P(z)) im Kern des Kernreaktors umfassen.

**2.** Verfahren nach Anspruch 1, wobei die axiale Leistungsverteilung (P(z)) ein Vektor mit einer Vielzahl von Komponenten ist, wobei jede Komponente einer durchschnittlichen Leistung des Kernreaktors pro Axialscheibe bei einem gegebenen Axialmaß entspricht, wobei jede Komponente eine der Eingaben des tiefen neuronalen Netzes (37) definiert.

**3.** Verfahren nach Anspruch 1 oder 2, wobei die Neutronenflussdetektoren (31) Ex-Core-Detektoren sind, die außerhalb des Kerns (3) angeordnet sind.

**4.** Verfahren nach Anspruch 1 oder 2, wobei die Neutronenflussdetektoren (31) permanent in den Kern (3) eingesetzte In-Core-Detektoren sind.

**5.** Verfahren nach einem der vorhergehenden Ansprüche, wobei der Kernreaktor (1) einen Druckbehälter (5) umfasst, der den Kern (3) und mindestens eine Primärschleife (7) enthält, wobei die Primärschleife (7) einen heißen und einen kalten Zweig (9, 11) umfasst, die mit dem Behälter (5) direkt fluidisch verbunden sind, wobei ein Druckhalter (13) einen Druck in der Primärschleife (7) steuert, und eine Primärpumpe (15) die Zirkulation des Primärfluids in der Primärschleife (7) sicherstellt, wobei die erfassten Größen für die oder jede Primärschleife (7) eine oder mehrere der folgenden Größen aufweisen: Druck des Druckhalters (p), Durchfluss (Q) von Primärfluid in der Primärschleife (7), Temperatur des Primärfluids im heißen und kalten Zweig (Tbc, Tbf).

**6.** Verfahren nach Anspruch 5, wobei die Eingaben des neuronalen Netzes (37) eine oder mehrere der folgenden Größen umfassen: Druck des Druckhalters (p), Durchfluss (Q) von Primärfluid in der Primärschleife (7), Temperatur des Primärfluids im kalten Zweig (Tbf).

**7.** Verfahren nach einem der vorhergehenden Ansprüche, wobei die Eingaben des neuronalen Netzes (37) die vom Kern freigesetzte Wärmeleistung (Pth) aufweisen.

**8.** Verfahren nach Anspruch 7 in Kombination mit Anspruch 5 oder 6, wobei die freigesetzte Wärmeleistung (Pth) durch Berechnung ermittelt wird, wobei zumindest der Druck des Druckhalters (p), der Durchfluss von Primärfluid (Q), die Temperaturen des Primärfluids im heißen und kalten Zweig (Tbc, Tbf), die für die mindestens eine primäre Schleife (7) erfasst wurden, verwendet werden.

**9.** Verfahren nach Anspruch 7 in Kombination mit Anspruch 4, wobei die freigesetzte Wärmeleistung (Pth) durch Berechnung unter Verwendung der erfassten Neutronenflussmessungen bestimmt wird.

**10.** Verfahren nach einem der vorhergehenden Ansprüche, wobei die Eingaben des neuronalen Netzes (37) den Enthalpieerhöhungsfaktor (FΔH) aufweisen.

**11.** Verfahren nach Anspruch 10 in Kombination mit Anspruch 3 und Anspruch 8, wobei die erfassten Größen eine aktuelle Einführposition der Kontrollorgane der Reaktivität des Kerns (21) umfassen, wobei der Enthalpieerhöhungsfaktor (FΔH) durch Durchführen der folgenden Schritte bestimmt wird:

- Berechnen eines radialen Leistungsspitzenfaktors (Fxy(z)) unter Verwendung der erfassten aktuellen Einführposition;
- Berechnen des Enthalpieerhöhungsfaktors (FΔH) unter Verwendung des berechneten radialen Leistungsspitzenfaktors (Fxy(z)), der rekonstruierten axialen Leistungsverteilung (P(z)) und der bestimmten freigesetzten Wärmeleistung (Pth).

**12.** Verfahren nach Anspruch 10 in Kombination mit Anspruch 4, wobei der Enthalpieerhöhungsfaktor (FΔH) unter Verwendung der axialen Leistungsverteilung (P(z)) rekonstruiert wird.

**13.** Verfahren nach einem der Ansprüche 5 bis 6, wobei der Kernreaktor (1) mehrere Primärschleifen (7) umfasst, wobei ein kritisches Wärmeflussverhältnis für jede Primärschleife (7) mit Hilfe des tiefen neuronalen Netzes (37) unter Verwendung von zumindest der für die Primärschleife (7) erfassten Größen berechnet wird.

**14.** Verfahren nach Anspruch 4, wobei die Detektoren (31) in mehreren Gruppen verteilt sind, wobei die Detektoren (31) einer Gruppe vertikal übereinander gestaffelt sind, wobei ein minimales kritisches Wärmeflussverhältnis für jede Gruppe von In-Core-Neutronenflussdetektoren (31) mit Hilfe des tiefen neuronalen Netzes (37) mit den bestimmten Eingaben unter Verwendung von mindestens den von den In-Core-Neutronenflussdetektoren (31) der Gruppe durchgeführten Neutronenflussmessungen berechnet wird.

**15.** Verfahren nach Anspruch 13 oder 14, wobei:

- im Schritt der Berechnung der Abweichungen ein Abweichungssatz zwischen jedem berechneten kritischen Wärmeflussverhältnis und der Vielzahl vorbestimmter Referenzwerte berechnet wird;
- im Schritt des Erzeugens eines Steuersignals, Erzeugen eines vorläufigen Steuersignals für jedes kritische Wärmeflussverhältnis, das unter Verwendung des entsprechenden Abweichungssatzes berechnet wurde, wobei das vorläufige Steuersignal aus der Liste ausgewählt wird, die mindestens die folgenden Werte aufweist:

* automatische Abschaltung des Reaktors oder Alarm;
* nichts tun;

wobei das Steuersignal unter Verwendung von mindestens mehreren der vorläufigen Steuersignale ermittelt wird.

**16.** Verfahren nach einem der vorhergehenden Ansprüche, wobei das kritische Wärmeflussverhältnis von dem tiefen neuronalen Netz (37) unter Verwendung der folgenden Formel berechnet wird:

$$Y(X_0) = \left[\prod_{i=1}^{i=nH+1} \sigma_i . A_i\right] . X_0$$

wobei Y das berechnete kritische Wärmeflussverhältnis ist;

$X_0$ ein Vektor ist, der aus den Eingaben des tiefen neuronalen Netzes (37) besteht;

nH die Anzahl der verborgenen Schichten des tiefen neuronalen Netzes ist;

$A_i$ eine vorbestimmte Matrix der Dimensionen $N_i * N_{i-1}$ ist, wobei $N_i$ die Anzahl der Neuronen in der Schicht i und $N_{i-1}$ die Anzahl der Neuronen in der Schicht i-1 ist;

$\sigma_i$ ein vorbestimmter nichtlinearer Operator ist.

**17.** Verfahren nach Anspruch 16, wobei $A_i$, eine Matrix ist, die als affine Transformation auf die Komponenten des Vektors $X_{i-1}$ wirkt, wobei der Vektor $X_i$ ein Vektor ist, dessen Komponenten von der Neuronenschicht i durch Verarbeitung des Wertevektors $X_{i-1}$ aus der unmittelbar vorhergehenden Schicht i-1 bestimmt werden.

**18.** Verfahren nach Anspruch 16 oder 17, wobei $\sigma_i$ als Sigmoidfunktion auf alle Komponenten des Vektors $A_i.X_{i-1}$ wirkt, wobei der Vektor $X_i$ ein Vektor ist, dessen Komponenten von der Neuronenschicht i durch Verarbeitung des Wertevektors $X_{i-1}$ aus der unmittelbar vorhergehenden Schicht i-1 bestimmt werden.

**19.** Verfahren nach einem der vorhergehenden Ansprüche, wobei das Verfahren einen Schritt des Entwerfens des tiefen neuronalen Netzes (37) umfasst, wobei der Entwurfsschritt die folgenden Teilschritte umfasst:

- Aufbauen einer Datenbank mit mindestens 100.000 Reaktorkernzuständen, wobei jeder Zustand durch einen Satz von Werten der Größen, die den Betrieb des Kernreaktors (1) charakterisieren, und durch einen Wert des minimalen kritischen Wärmeflussverhältnisses definiert ist, der durch einen thermohydraulischen 3D-Referenzberechnungscode unter Verwendung des Wertesatzes berechnet wurde, wobei die Zustände derart gewählt werden, dass sie eine Vielzahl von vorher festgelegten Unfallsituationen der Kategorie 2 abdecken, wobei das Reaktorsteuerungssystem (23) zur Verarbeitung der Unfallsituationen vorgesehen ist;
- Ausbilden des tiefen neuronalen Netzes (37) unter Verwendung von mindestens einem Teil der Datenbank;
- Validieren des tiefen neuronalen Netzes unter Verwendung eines Teils der Datenbank, der unabhängig von dem für die Ausbildungsphase verwendeten Teil ist, und Testen des neuronalen Netzes, das durch Kopplung mit Codes für unfallbedingte Neutronik und Thermohydraulik erhalten wurde, wodurch ermöglicht wird, unfallbedingte Transienten zu simulieren, die den Eingriff des Steuersystems erfordern (23).

**20.** Kernreaktor (1), umfassend:

- einen Kern (3);
- ein Steuersystem (23);
- eine Informationsverarbeitungseinheit (35), die ausgelegt ist, das Betriebsverfahren nach einem der vorhergehenden Ansprüche durchzuführen.

**Claims**

**1.** A method for operating a nuclear reactor (1) comprising a core (3), the method comprising the following steps:

- acquisition of a plurality of quantities characterizing the operation of the nuclear reactor (1);
- calculation of at least one critical thermal flux ratio;
- calculation of the deviations between the at least one calculated critical thermal flux ratio from a plurality of predetermined reference threshold values;
- generation of a control signal for a control system (23) of the reactor, using the calculated deviations, the control signal being selected from a list comprising at least the following values:

* automatic reactor shutdown or alarm;
* do nothing;

- emergency shutdown of the nuclear reactor (1) by the control system (23) when the elaborated control signal has the value "automatic reactor shutdown", or emission of an alarm signal by the control system (23) when the elaborated control signal has the value "alarm";

**characterized in that** the at least one critical thermal flux ratio is calculated using a deep neural network (37), the entries of the deep neural network (37) being determined using the acquired quantities, the deep neural network comprising at least two hidden layers of at least five neurons each, said acquired quantities comprising neutron flux measurements made by neutron flux detectors (31), the entries of the neural network (37) comprising the axial power distribution (P(z)) in the core of the nuclear reactor, reconstructed from the acquired neutron flux measurements.

**2.** The method according to claim 1, wherein the axial power distribution (P(z)) is a vector having a plurality of components, each component corresponding to an average power of the nuclear reactor per axial slice at a given axial position, each component defining one of the entries of the deep neural network (37).

**3.** The method according to claim 1 or 2, wherein the neutron flux detectors (31) are ex-core detectors arranged outside the core (3).

**4.** The method according to claim 1 or 2, wherein the neutron flux detectors (31) are in-core detectors permanently inserted in the core (3).

5. The method according to any one of the preceding claims, wherein the nuclear reactor (1) comprises a pressure vessel (5) containing the core (3) and at least one primary loop (7), the primary loop (7) comprising hot and cold branches (9, 11) fluidly connected directly to the vessel (5), a pressurizer (13) controlling a pressure in the primary loop (7), and a primary pump (15) ensuring the circulation of primary fluid in the primary loop (7), the acquired quantities comprising, for the or each primary loop (7), one or more of the following quantities: pressure of the pressurizer (p), flow rate (Q) of primary fluid in the primary loop (7), temperature of the primary fluid in the hot and cold branches (Tbc, Tbf).

6. The method according to claim 5, wherein the neural network entries (37) have one or more of the following variables: pressurizer pressure (p), flow rate (Q) of primary fluid in the primary loop (7), temperature of the primary fluid in the cold branch (Tbf).

7. The method according to any of the preceding claims, wherein the entries of the neural network (37) include the thermal power released by the core (Pth).

8. The method according to claim 7 in combination with claim 5 or 6, wherein the thermal power (Pth) released is determined by calculation, using at least the pressurizer pressure (p), the primary fluid flow rate (Q), the temperatures of the primary fluid in the hot and cold branches (Tbc, Tbf), acquired for the at least one primary loop (7).

9. The method according to claim 7 in combination with claim 4, wherein the thermal power (Pth) released is determined by calculation, using the acquired neutron flux measurements.

10. The method according to any one of the preceding claims, wherein the entries of the neural network (37) include the enthalpy rise factor (F∆H).

11. The method according to claim 10 in combination with claim 3 and claim 8, wherein the acquired quantities include a current insertion position of the core reactivity control bodies (21), the enthalpy rise factor (F∆H) being determined by carrying out the following operations:

    - calculation of a radial power peak factor (Fxy(z)) using the current acquired insertion position;
    - calculation the enthalpy rise factor (F∆H) using the calculated radial power peak factor (Fxy(z)), the reconstructed axial power distribution (P(z)) and the determined thermal power output (Pth).

12. The method according to claim 10 in combination with claim 4, wherein the enthalpy rise factor (F∆H) is reconstructed using the axial power distribution (P(z)).

13. The method according to any one of claims 5 to 6, wherein the nuclear reactor (1) comprises several primary loops (7), a critical thermal flux ratio being calculated for each primary loop (7) with the aid of the deep neural network (37) using at least said acquired quantities for said primary loop (7).

14. The method according to claim 4, in which the detectors (31) are distributed in several sets, the detectors (31) of a same set being vertically staggered one above the other, a minimum critical thermal flux ratio being calculated for each set of in-core neutron flux detectors (31) with the aid of the deep neural network (37) with the entries determined using at least the neutron flux measurements made by the in-core neutron flux detectors (31) of said set.

15. The method according to claim 13 or 14, wherein

    - in the deviation calculation step, a set of deviations is calculated between each calculated critical heat flux ratio and the plurality of predetermined reference values;
    - in the step of elaborating a control signal, elaborating a provisional control signal for each calculated critical heat flux ratio using the corresponding set of deviations, the provisional control signal being selected from the list comprising at least the following values:

        * automatic reactor shutdown or alarm;
        * do nothing;

the control signal being elaborated using at least several of the provisional control signals.

16. The method according to any of the preceding claims, wherein the critical heat flux ratio is calculated by the deep neural network (37) using the following formula:

$$Y(X_0) = \left[\prod_{i=1}^{i=nH+1} \sigma_i . A_i\right] . X_0$$

where Y is the calculated critical thermal flux ratio
$X_0$ is the vector of entries;
nH is the number of hidden layers of the deep neural network;
Ai is a predetermined matrix of dimensions $N_i$ * $N_{i-1}$, $N_i$, where $N_i$ is the number of neurons in layer i and $N_{i-1}$ is the number of neurons in layer i-1;

$\sigma_i$ is a predetermined non-linear operator.

17. The method according to claim 16, wherein Ai is a matrix acting as an affine transformation on the components of the vector Xi-1, the vector Xi-1 being the vector whose components are determined by the neuron layer i-1.

18. The method according to claim 16 or 17, wherein σi acts as a sigmoid function on all components of the vector $A_i.X_{i-1}$, the vector Xi-1 being the vector whose components are determined by the neuron layer i-1.

19. The method according to any of the foregoing claims, wherein the method comprises a deep neural network design step (37), the design step containing the following sub-steps:

   - constitution of a database containing at least 100,000 reactor core states, each state being defined by a set of values of said quantities characterizing the operation of the nuclear reactor (1) and by a minimum critical thermal flux ratio value calculated by a reference 3D thermo-hydraulic calculation code using the set of values, said states being chosen to cover a plurality of predetermined category 2 accident situations, the control system (23) of the reactor being provided to handle said accident situations;
   - learning of the deep neural network (37), using at least part of the database;
   - validation of the deep neural network using a part of the database independent of that used for the learning phase, and testing of the neural network obtained by coupling with accidental neutronic and thermal-hydraulic codes making it possible to simulate accidental transients requiring the intervention of the control system (23).

20. A nuclear reactor (1) comprising:

   - a core (3);
   - a control system (23);
   - an information processing unit (35), configured to implement the operating method for any one of the preceding claims.

FIG.1

FIG.2

**FIG.3**

EP 3 850 641 B1

FIG.4

FIG.5

**EP 3 850 641 B1**

## RÉFÉRENCES CITÉES DANS LA DESCRIPTION

**Documents brevets cités dans la description**

- US 4330367 A

- US 2016180976 A1